**Europäisches Patentamt**

**European Patent Office**

**Office européen des brevets**

(19)

(11) Veröffentlichungsnummer: **0 221 367**
**A1**

(12) # EUROPÄISCHE PATENTANMELDUNG

(21) Anmeldenummer: **86113750.3**

(22) Anmeldetag: **03.10.86**

(51) Int. Cl.⁴: **B 65 B 1/34**
**G 01 G 13/04**

(30) Priorität: **15.10.85 CH 4444/85**

(43) Veröffentlichungstag der Anmeldung:
**13.05.87 Patentblatt 87/20**

(84) Benannte Vertragsstaaten:
**AT BE CH DE ES FR GB GR IT LI LU NL SE**

(71) Anmelder: **Chematec AG**
**Steinligasse 42**
**CH-4313 Möhlin(CH)**

(72) Erfinder: **Meier, Kurt**
**Grundackerstrasse 14b**
**CH-4414 Füllinsdorf(CH)**

(74) Vertreter: **Eschmann, Heinz et al,**
**A. Braun, Braun, Héritier, Eschmann AG Patentanwälte**
**Holbeinstrasse 36-38**
**CH-4051 Basel(CH)**

(54) Verfahren zum Betreiben von Dosiervorrichtungen.

(57) Beim erfindungsgemässen Verfahren wird das Dosierorgan einer Abfüllanlage auf eine vorbestimmte Oeffnung (DF1) eingestellt und die Gewichtszunahme während einer Messperiode (T1) ermittelt. Die Oeffnung (DF1) entspricht der für die Feindosierung vorgesehenen Oeffnung des Dosierorganes. Aufgrund des Messwertes können nun verschiedene Parameter, beispielsweise die Oeffnung (DG) für die Grobdosierung und die definitive Oeffnung (DF2) für die Feindosierung, optimal eingestellt werden.

Anschliessend an die Messperiode erfolgt bei der auf diese Weise ermittelten Oeffnung (DG) für die Grobdosierung während einer zweiten Messperiode (T2) eine weitere Messung der Gewichtszunahme G2, wobei dieser zweite Messwert als Ausgangspunkt zur Bestmmung der Dauer (TG) für die Grobdosierung genommen wird.

Ein Impulsprogramm, bei dem das Dosierorgan jeweils während einer Impulsdauer (TI) auf eine vorbestimmte Oeffnung (DF3) gefahren und anschliessend jeweils weider geschlossen wird, hilft Durchflussblockaden zu überwinden.

Mit Hilfe der erfindungsgemässen Steuerung der Abfüllprozesse lassen sich Fehleinschätzungen des Bedienpersonals weitgehend unterbinden. Die Bedienung kann stark vereinfacht werden, dass nur noch das Sollgewicht und in gewissen Fällen das zu erwartende Fliessverhalten eingestellt werden muss. Auch wird die für einen Dosiervorgang benötigte Zeit stark reduziert.

./...

EP 0 221 367 A1

Fig.2

Verfahren zum Betreiben von Dosiervorrichtungen

Die vorliegende Erfindung betrifft ein Verfahren gemäss Oberbegriff des Patentanspruches 1.

Dosiervorrichtungen müssen bekanntlich äusserst genau und zuverlässig arbeiten, da schon geringe Abweichungen vom Soll-Gewicht unliebsame Störungen in der späteren Verarbeitung des dosierten Mediums nach sich ziehen können. Doch selbst wenn Abweichungen von Sollgewicht auf die spätere Verarbeitung keinen nennenswerten Einfluss haben sollten, so addieren sich die einzelnen Abweichungen über eine längere Zeitspanne zusammen und können - insbesondere bei teuren Substanzen - eine nicht zu vernachlässigende Ertragseinbusse zur Folge haben.

Praktisch alle bekannten Systeme arbeiten mit einer 2-stufigen Steuerung, wobei eine mehr oder weniger grosse Automatisierung vorgefunden wird. Alle Systeme sind jedoch mit der gleichen Unzulänglichkeit behaftet, welche im natürlichen Verhalten der abzufüllenden Feststoffe zu suchen ist.

In einer ersten Stufe, welche auch als "Grobdosierung" bezeichnet wird, ist das Dosierventil ganz geöffnet. So kann zwar die grösste Abfüllgeschwindigkeit erzielt werden, jedoch ist eine präzise Dosierung nicht möglich. Deshalb pflegt nur ein erster Teil des Abfüllgutes mit Grobdosierung abgefüllt zu werden. In einer zweiten Stufe, welche als "Feindosierung" bezeichnet wird, ist das Ventil nur noch zu einem Spalt geöffnet. In dieser Stufe kann zwar sehr präzise abgefüllt werden, jedoch ist die Abfüllgeschwindigkeit klein.

Der Umschaltpunkt von Grob- auf Feindosierung ist beliebig variabel und wird vom Bedienungspersonal jeweils dem vorhandenen Steuersystem als fester Gewichtswert vorgegeben. Der zu wählende Punkt ist abhängig von der Reaktionszeit der Steuerung zwischen grob-fein, den Fliesseigenschaften des jeweiligen Produktes, der vom Wägesystem nocht nicht erfassten Menge (unterwegs zwischen Drosselorgan und abzufüllendem Behälter), der Feindosierung, sowie einer individuellen Sicherheitsmarge. Unterlaufen Fehleinschätzungen bei einem oder mehreren dieser Parameter, kann es vorkommen, dass bis zu Umschaltung auf Feindosierung das Sollgewicht bereits überschritten ist. Da sich das Fliessverhalten eines Produktes kontinuierlich ändern kann, ist man gezwungen, mit einer relativ langen Feindosierungsphase zu arbeiten, um die erforderliche Sicherheit einer genauen Abfüllung zu erhalten. Die Endabschaltung des Dosiervorganges erfolgt mittels des selektiven Toleranzfeldes, welches dem Sollwert zugeordnet ist. Die plus/minus Begrenzung ist wiederum von den gleichen Parametern abhängig wie die grob-fein Umschaltung. Wird nun von der Waage der Eintritt in das Sollwerttoleranzfeld festgestellt, wird die Dosierung automatisch abgestellt. Die Genauigkeit der Abfüllung hängt nun von der Wahl des optimalen Toleranzfeldes und dessen Platzierung im bezug auf den Sollwert ab. Die Schlussfolgerung hieraus ist: Jede genaue Abfüllung ist ein Zufallstreffer. Um jedoch keine Minusabfüllungen zu erhalten, werden die Toleranzfelder meistens auf die sichere Seite geschoben, was wiederum zur Folge hat, dass praktisch mit jeder Abfüllung eine gewisse Menge Produkt verschenkt wird. Sollten jedoch trotzdem Minusabfüllungen vorkommen, sind die heutigen Steuerungen bereits mit automatischen Nachdosiereinrichtungen versehen. Diese lassen jedoch im bezug auf ihre Genauigkeit ebenfalls Wünsche offen.

Die Erfindung, wie sie in den Ansprüchen gekennzeichnet ist, löst die Aufgabe, zum einen ein Verfahren anzugeben, gemäss welchem bei möglichst einfacher Bedienung in möglichst kurzer Zeit eine präzise Abfüllung durchgeführt werden kann.

Die Grundidee der Erfindung liegt darin, dass bei vorbestimmter Ventilöffnung die Gewichtszunahme G' während einer bestimmten Zeitspanne gemessen wird. Damit kann auf das Verhalten des Dosiergutes bei den verschiedenen Abfüllvorgängen geschlossen werden, und es können aufgrund des anfänglich bestimmten Messwertes verschiedene für die Abfüllung relevante Parameter optimal eingestellt werden. Bei Wechsel des Dosiergutes entfallen Probeabfüllungen.

Nachstehend wird die Erfindung anhand von Figuren beispielsweise näher erläutert. Es zeigen:

Fig. 1 ein Blockschaltbild einer Dosiersteuereinheit,

Fig. 2 ein Diagramm des zeitlichen Verlaufs der Oeffnungseinstellung eines Dosierorganes.

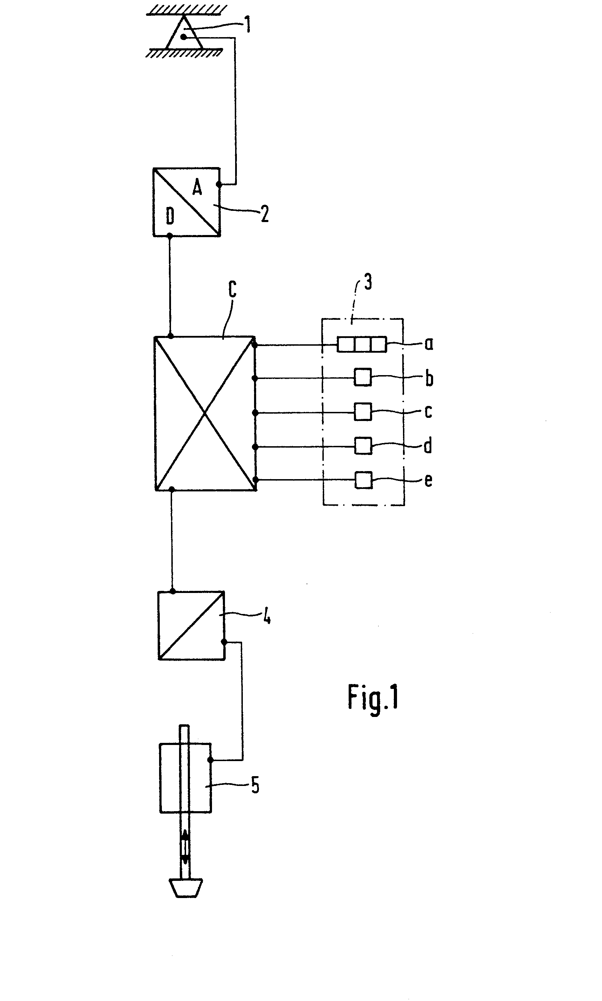

Die Dosiersteuereinheit gemäss Fig. 1 enthält einen Gewichtssensor 1, welcher das Gewicht eines in der Figur nicht eingezeichneten Dosierbehälters oder Gebindes ermittelt. Der Gewichtssensor 1 ist über einen Analog/ Digitalwandler 1 an einem Mikroprozessor C angeschlossen. Dieser enthält ein Tastenfeld 3, mittels welchem folgende Parameter eingestellt werden können.

a) Sollwerteingabe des Gewichts
b) Startsignal
c) Stopsignal
d) Rückstellung
e) Neustart
f) gegebenenfalls eine in der Figur nicht dargestellte Möglichkeit der Eingabe der zu erwartenden Fliessfähigkeit des Dosiergutes.

Ein Dosierorgan 5, mittels welchem der Fluss des Dosiergutes in den Dosierbehälter bzw. in das Gebinde gesteuert wird, ist über ein Stellsignalwandler 4 am Mikroprozessor C angeschlossen.

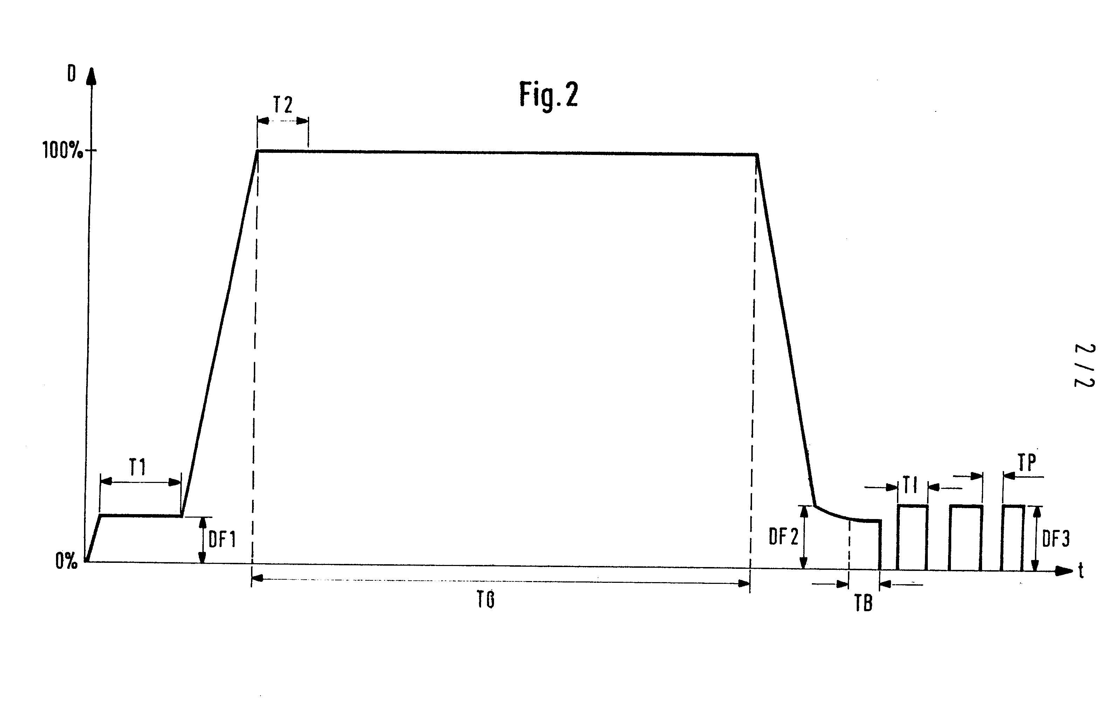

Der Dosierprozess läuft vollautomatisch ab und ist in Fig. 2 visualisiert. Die Abszisse bildet die Zeitachse t. In der Ordinate ist die Oeffnung D des Dosierorganes 5 zu verschiedenen Zeitpunkten eingetragen. Nach dem Start wird das Dosierorgan 5 auf eine vorbestimmte Oeffnung DF1 gefahren und wird während einer vorbestimmten Zeit, welche in der Figur als Messperiode T1 eingetragen ist, in dieser Stellung gehalten. Die vorbestimmte Oeffnung DF1 kann beliebig gewählt werden. Vorzugsweise entspricht sie jedoch der für die Feindosierung vorgesehenen Oeffnung des Dosierorganes 5, welche von der zu erwartenden Fliessfähigkeit des Dosiergutes abhängt. Hierfür existieren Produkttabellen mit Erfahrungswerten, die gegebenenfalls von einem Speicher eines Mikroprozessors C abgerufen werden können. Vier Fünftel aller Produkte haben etwa die gleiche Fliessfähigkeit, bei welcher das Dosierorgan 5 für die Feindosierung erfahrungsgemäss etwa 10 % geöffnet wird. Die während dieser Messperiode T1 erfolgte und im Folgenden als Messwert G1 bezeichnete Gewichtszunahme des Dosiergutes wird mit Hilfe des Gewichtssensors 1 festgestellt und in einem Speicher des Mikroprozessors C abgespeichert.

Im Anschluss an die Messperiode T1 wird die Oeffnung des Dosierorganes 5 auf Grobdosierung DG eingestellt. Hierbei kann das Dosierorgan 5 ganz geöffnet werden. Sollte das Produkt jedoch stark schiessend sein oder die Abfüllmenge so gering sein, dass eine vollständige Oeffnung des Dosierorganes zu einem nicht mehr kontrollierbaren Abfüllvorgang führen würde, kann aufgrund des vorgängig ermittelten Messwertes G1 mittels des Mikroprozessors C die optimale Oeffnung DG des Dosierorganes 5 ermittelt und eingestellt werden.

Sobald die Oeffnung des Dosierorganes 5 auf Grobdosierung DG eingestellt ist, läuft eine Messperiode T2, bei welcher während einer vorbestimmten Zeit die Gewichtszunahme des Dosiergutes mittels des Gewichtssensors 1 ermittelt und als Messwert G2 im Speicher des Mikroprozessors C festgehalten wird.

Aufgrund des Messwertes G2 wird im Mikroprozessor C die Dauer TG der Grobdosierung vorbestimmt. Nach Ablauf dieser Dauer TG wird die Oeffnung D des Dosierorgenes 5 auf eine aufgrund des Messwertes G1 optimierte Stellung für "Feindosierung" DF2 gebracht und in der nun folgenden Auswägephase entsprechend der Gewichtszunahme des Dosiergutes laufend verkleinert, bis das gewünschte Sollgewicht erreicht ist.

Es kann nun ohne weiteres geschehen, das **0221367** Dosiergut mehr ausfliesst, wenn die Oeffnung D des Dosierorganes 5 eine minimale Grösse unterschreitet. Dieses Phänomen, das für pulverförmige oder kristalline Produkte typisch ist, ist auf Brückenbildungen, Adhäsionen, statische Ladungen zurückzuführen und nicht zuletzt auch mit dem Gleitfaktor in Zusammenhang zu bringen. Diese Durchflussblockade ist weder durch Erhöhen des Vordruckes noch durch einen gegebenenfalls verwendeten Abstreifer aufzuheben. Flüssigkeiten weisen im Gegensatz dazu eine proportionale Durchflusscharakteristik auf und können ohne weitere Massnahmen optimal an den Sollpunkt gefahren werden.

Falls nun das Gewicht während einer minimalen Zeitdauer TB konstant bleibt - und dies kann mittels eines Mikroprozessors C leicht festgestellt werden - ist dies ein Indiz für die erwähnte Durchflussblockade. Diese lässt sich nun mit einem sogenannten "Impulsprogramm" problemlos überwinden. Hierbei wird das Dosierorgan impulsmässig auf eine bestimmte Oeffnung DF3 gebracht und impulsmässig wieder geschlossen. Diese Oeffnung DF3 duerfte in den meisten Fällen etwa der aufgrand des Messwertes M1 für Feindosierung ermittelte Oeffnung DF2 entsprechen. Es ist aber auch denkbar, dass in bestimmten Fällen eine etwas abweichende Oeffnung DF3 des Dosierorganes zu besseren Resultaten führt. Nebst der Oeffnung DF3 des Dosierorganes können die Impulsdauer TI als auch der Zeitraum TP zwischen den einzelnen Impulsen optimal eingestellt werden.

Das Impulsprogramm wird nun so lange durchgeführt, bis der Sollwert für das Abfüllgewicht erreicht ist. In der Fig. 2 sind die Impulse TI einzeln dargestellt.

Nebst einer Ueberwindung einer Durchflussblockade hat das Impulsprogramm zudem noch den Vorteil, dass immer nur kleine, von der Waage noch nicht erfasste Mengen Dosier

gutes zwischen Schliessorgan und Gebinde unterwegs sind, so dass eine optimale Abfüllgenauigkeit erreicht werden kann.

In der Regel ist es für eine optimale Dosierung erforderlich, beide Messwerte G1 und G2 bei Fein- und Grobdosierung zu ermitteln, dann bei den meisten Produkten hängt das Fliessverhalten auch mit der Oeffnung des Dosierorganes 5 zusammen.

Je nach Produkte und Anforderung an die Dosiergenauigkeit kann aber auch eine einzige Messung (beispielsweise G1) genügen, um sämtliche für den gewünschten Dosierablauf relevanten Parameter zu bestimmen. Auch ist es denkbar, einen Messwert bei einer anderen Oeffnungsstellung des Dosierorganes, als derjenigen für Fein- oder Grobdosierung als Ausgangspunkt für die Optimierung der für einen Dosiervorgang wesentliche Parameter zu wählen.

Mit Hilfe der erfindungsgemässen Steuerung der Abfüllprozesse werden Fehleinschätzungen des Bedienpersonals weitgehend unterbunden. Die Bedienung kann so weit vereinfacht werden, dass nur noch das Sollgewicht und gegebenenfalls das zu erwartende Fliessverhalten eingestellt werden. Je nach Bedarf und Abfüllanlage ist entweder ein manueller oder ein automatischer Start eines Dosiervorganges möglich.

E

Patentansprüche

1. Verfahren zum Dosieren von flüssigen, pastösen, granulat- oder pulverförmigen Substanzen, bei dem die jeweils abzufüllende Substanz von einem Dosierbehälter über ein Dosierorgan in ein Abfüllgefäss eingefüllt wird, dadurch gekennzeichnet, dass die bei einer vorbestimmten Oeffnung des Dosierorgans während einer vorbestimmten Messdauer erzielte Gewichtszunahme im Abfüllgefäss bestimmt wird, und dass aufgrund dieses Messwertes wenigstens ein für den Abfüllvorgang relevanter Parameter eingestellt wird.

2. Verfahren nach Anspruch 1, dadurch gekennzeichnet, dass die vorbestimmte Oeffnung des Dosierorganes derjenigen für eine Feindosierung entspricht und dass die Messung im Zeitraum vor oder bei Beginn eines Abfüllvorganges vorgenommen wird.

3. Verfahren nach Anspruch 1 oder 2, dadurch gekennzeichnet, dass ein relevanter Parameter die Stellung des Ventils für die Grobdosierung ist.

4. Verfahren nach einem der Ansprüche 2 oder 3, dadurch gekennzeichnet, dass ein relevanter Parameter die Stellung des Dosierorganes für die Feindosierung im Anschluss an die Grobdosierung ist.

5. Verfahren nach Anspruch 1 oder 3, dadurch gekennzeichnet, dass die vorbestimmte Oeffnung des Dosierorgans derjenigen für eine Grobdosierung entspricht.

6. Verfahren nach Anspruch 5, dadurch gekennzeichnet, dass ein relevanter Parameter die Dauer des Grobdosierungsvorganges ist.

7. Verfahren nach Anspruch 5, dadurch gekennzeichnet, dass ein relevanter Parameter das Gewicht ist, das erreicht werden soll, bevor von Grobdosierung auf Feindosierung umgeschaltet wird.

8. Verfahren nach einem der Ansprüche 1 bis 4, dadurch gekennzeichnet, dass die Oeffnung des Dosierorganes bei der Feindosierung proportionel zur Gewichtszunahme laufend verringert wird.

9. Verfahren nach Anspruch 8, dadurch gekennzeichnet, dass während der Feindosierungsphase laufend überwacht wird, ob eine Gewichtszunahme stattfindet und dass - falls während einer vorbestimmten Zeitdauer keine Gewichtszunahme mehr erfolgt ist - dass Dosierorgan geschlossen und alsdann impulsweise geöffnet und wieder geschlossen wird.

10. Verfahren nach Anspruch 9, dadurch gekennzeichnet, dass ein relevanter Parameter die Oeffnungsstellung des Dosierorganes während einer Impulsdauer ist.

11. Verfahren nach einem der Ansprüche 9 oder 10, dadurch gekennzeichnet, dass ein relevanter Parameter die Impulsdauer und/oder der zeitliche Abstand zwischen den Impulsen ist.

E

0221367

Fig.1

Fig.2

0221367

**EUROPÄISCHER RECHERCHENBERICHT**

Nummer der Anmeldung

Europäisches
Patentamt

EP  86 11 3750

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 013 687 (GULDE-REGELARMATUREN) * Insgesamt * | 1-8 | B 65 B    1/34 G 01 G   13/04 |
| X | DE-A-3 127 131  (BEHN MASCHINENFABRIK) * Zusammenfassung; Patentanspruch 1 * | 1,6 | |
| X | US-A-4 381 545  (BIDDLE III et al.) * Patentansprüche * | 1,4,5,8 | |
| A | US-A-4 100 984  (KLOPFENSTEIN et al.) * Spalte 6, Zeilen 10-12 * | 9 | |

---

RECHERCHIERTE SACHGEBIETE (Int. Cl.4)

B 65 B
G 01 G

Der vorliegende Recherchenbericht wurde für alle Patentansprüche erstellt.

| Recherchenort | Abschlußdatum der Recherche | Prüfer |
|---|---|---|
| DEN HAAG | 21-01-1987 | SCHELLE, J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82